# EUROPEAN PATENT APPLICATION

(11) **EP 4 759 144 A1**
(43) Date of publication of application: **17.06.2026**
(21) Application number: 25150954.3
(22) Date of filing: 09.01.2025
(51) Int. Cl.: A23G 9/12, A23G 9/22, B01F 101/13

(54) **ICE CREAM MACHINE EASY TO DRIVE**

(30) Priority: 11.12.2024 CN 202411817474
(71) Applicant: Huizhou Liantek Technology Appliances Co., Ltd., Huizhou, Guangdong 516000 (CN)
(72) Inventor: ZHANG, Yuqi, Huizhou (CN); WANG, Hongtao, Huizhou (CN)
(74) Representative: Metida

(57) **Abstract**

Disclosed in the present invention is an ice cream machine easy to drive, including a housing; a stirring shaft, movably extending out of the housing; a lifting assembly, including a lifting motor and a lifting mechanism, the lifting motor being fixedly arranged in the housing and driving the lifting mechanism to ascend and descend, and the stirring shaft being connected to the lifting mechanism and ascending and descending synchronously; and a drive assembly, including a stirring motor and a drive mechanism, the stirring motor being fixedly arranged in the housing and driving the drive mechanism to rotate, the drive mechanism being arranged on the lifting mechanism, and the drive mechanism being connected to the stirring shaft and used for driving the stirring shaft to rotate. The present invention solves the problems that the drive structure of the ice cream machine is complex and the motor is prone to breakdown.

## Description

### FIELD OF TECHNOLOGY

The present invention relates to the technical field of kitchen appliance devices, and in particular, to an ice cream machine easy to drive.

### BACKGROUND

An ice cream machine is generally used for making ice cream. A user mixes and places raw materials for making ice cream into a stirring cup of the ice cream machine, and starts the ice cream machine, and a stirring shaft stirs the raw materials in a cup body by means of a drive mechanism, so that different types of ice cream can be made, thereby improving the making efficiency of the user.

In the existing ice cream machine, a stirring shaft is engaged and driven by means of a multistage gear, so that a driving end of a motor controls the stirring shaft to achieve stirring. However, in the drive mechanism of the existing ice cream machine, the multi-gear drive structure is complex and prone to breakdown, is difficult to assemble, and has high requirements for manufacturing precision, and the noise generated during gear drive is large. In addition, the motor synchronously ascends and descends along with a mounting platform of the stirring shaft during ascending and descending of the stirring shaft, resulting in a line fault in the motor.

### SUMMARY

The major purpose of the present invention is to provide an ice cream machine easy to drive, aiming at solving the problems that a drive structure of the ice cream machine is complex and a motor is prone to breakdown.

To achieve the purpose described above, the present invention proposes an ice cream machine easy to drive, including:
a housing;
a stirring shaft, movably extending out of the housing;
a lifting assembly, including a lifting motor and a lifting mechanism, the lifting motor being fixedly arranged in the housing and driving the lifting mechanism to ascend and descend, and the stirring shaft being connected to the lifting mechanism and ascending and descending synchronously; and
a drive assembly, including a stirring motor and a drive mechanism, the stirring motor being fixedly arranged in the housing and driving the drive mechanism to rotate, the drive mechanism being arranged on the lifting mechanism, and the drive mechanism being connected to the stirring shaft and used for driving the stirring shaft to rotate.

Optionally, the drive mechanism includes a synchronous belt, a first belt wheel, and a second belt wheel, the synchronous belt is respectively connected to the first belt wheel and the second belt wheel, the first belt wheel is connected to a driving end of the stirring motor, and the second belt wheel is connected to the stirring shaft.

Optionally, the driving end of the stirring motor is provided with a drive rod, the first belt wheel is provided with a first driving hole for the drive rod to penetrate through, and the drive rod drives the first belt wheel to rotate circumferentially.

Optionally, the first driving hole and the drive rod are both of a semicircular structure in cross section.

Optionally, a diameter of the first belt wheel is less than that of the second belt wheel.

Optionally, stop blocks are arranged at edges of an upper side and a lower side of the second belt wheel, and the synchronous belt is located between intervals of the stop blocks.

Optionally, a fixed support assembly is arranged in the housing, the fixed support assembly includes an upper support plate, a lower support plate, and a support shaft, the support shaft is connected to the upper support plate and the lower support plate, the stirring motor and the lifting motor are both fixed to the lower support plate, and the lifting mechanism moves between the upper support plate and the lower support plate.

Optionally, the lifting mechanism includes a lifting platform and a screw rod, the lifting platform is located between the upper support plate and the lower support plate, the lifting motor is connected to the screw rod and drives the screw rod to rotate, the lifting platform is provided with a tooth sleeve for the screw rod to penetrate through, and a thread fitting with the screw rod is arranged on an inner wall of the tooth sleeve.

Optionally, the stirring shaft penetrates through the lifting platform, and the lifting platform is provided with a bearing assembly surrounding the stirring shaft.

Optionally, the upper support plate and the lower support plate are each provided with a lifting detection switch, the lifting detection switch is used for controlling turning-off of the lifting motor, and the lifting platform is provided with a trigger member for triggering the lifting detection switch; and/or
the upper support plate is further provided with an engaging and retracting detection switch for controlling engaging and retracting of the stirring shaft, the engaging and retracting detection switch is used for controlling the stirring shaft to engage and retract, and the lifting platform is correspondingly provided with an engaging and retracting switch lever for triggering the engaging and retracting detection switch.

The present invention has the following beneficial effects: the drive structure of the ice cream machine is simplified, and the problem of noise of the ice cream machine during use is reduced, and the service life of the motor is prolonged; the stirring motor and the lifting motor are fixedly arranged in the housing, so that the motor does not make ascending and descending movement during working, thereby ensuring the safety of use of the motor; the driving end of the stirring motor is connected to the drive mechanism, and the drive mechanism is connected to the stirring shaft, so that the stirring motor drives the drive mechanism to drive the stirring shaft to rotate, thereby achieving stirring; the drive mechanism is arranged on the lifting mechanism and ascends and descends synchronously along with the lifting mechanism, and the lifting mechanism is connected to the stirring shaft to drive the stirring shaft to ascend and descend, so that the stirring shaft is inserted into the stirring cup.

### BRIEF DESCRIPTION OF THE DRAWINGS

To describe the technical solutions in the embodiments of the present invention or in the prior art more clearly, the following will briefly introduce the drawings required for describing the embodiments or the prior art. Apparently, the drawings in the following description show merely some embodiments of the present invention, and other drawings may also be obtained according to structures shown in these drawings without paying out any creative effort.
FIG. 1 is a schematic view of an overall structure of an ice cream machine easy to drive of the present invention;
FIG. 2 is a schematic view of a sectional structure of an ice cream machine easy to drive of the present invention;
FIG. 3 is a schematic view of an internal structure of an ice cream machine easy to drive of the present invention;
FIG. 4 is a schematic structural view of a fixed support assembly and a lifting assembly shown in FIG. 3;
FIG. 5 is a schematic exploded structural view of a drive assembly and a lifting assembly shown in FIG. 3;
FIG. 6 is a schematic view of a sectional structure of a drive assembly and a lifting assembly shown in FIG. 3;

### Reference signs:

1, Housing; 11, Mounting space;
2, Stirring shaft; 21, Connector;
3, Lifting assembly; 31, Lifting mechanism; 311, Lifting platform; 3111, Shaft sleeve; 3112, Tooth sleeve; 3113, Bearing assembly; 3114, Trigger member; 3115, Engaging and retracting switch lever; 312, Screw rod; 32, Lifting motor;
4, Drive assembly; 41, Stirring motor; 411, Drive rod; 42, Drive mechanism; 421, Synchronous belt; 422, First belt wheel; 4221, First driving hole; 423, Second belt wheel; 4231, Stop block; 4232, Second driving hole;
5, Fixed support assembly; 51, Upper support plate; 511, Engaging and retracting detection switch; 52, Lower support plate; 53, Support shaft; 54, Lifting detection switch;
6, Stirring cup assembly; 61, Cup body; 62, Cup cover; 63, Stirring blade;
Implementation of the objectives, functional features, and advantages of the present invention will be further described with reference to the drawings in combination with the embodiments.

### DESCRIPTION OF THE EMBODIMENTS

The following will clearly and completely describe the technical solutions in the embodiments of the present invention in combination with the drawings in the embodiments of the present invention. Apparently, the embodiments to be described are merely a part rather than all of the embodiments of the present invention. All other embodiments obtained by those of ordinary skill in the art based on the embodiments of the present invention without paying out any creative effort shall fall within the scope of protection of the present invention.

It needs to be noted that if the embodiments of the present invention relate to a directivity indication (e.g., up, down, left, right, front, back, ...), the directivity indication is only used for explaining a relative position relationship, a motion condition, etc. between components in a certain specific posture (as shown in the drawings), and if the specific posture changes, the directivity indication changes accordingly.

In addition, if the embodiments of the present invention relate to the descriptions such as "first" and "second", the descriptions such as "first" and "second" are only for the purpose of description, and cannot be understood as indicating or implying the relative importance thereof or implicitly indicating the number of indicated technical features. Thus, the features defined with "first" and "second" may explicitly or implicitly include at least one of the features. In addition, if the meaning of "and/or" appearing in the whole text is comprising three parallel solutions, e.g., "A and/or B", comprising solution A, or solution B, or both A and B. In addition, the technical solutions of the embodiments can be combined with each other, but they must be based on the implementation by those of ordinary skill in the art. When the combination of the technical solutions is contradictory or cannot be implemented, it shall be considered that the combination of the technical solutions does not exist, and does not fall within the scope of protection of the present invention.

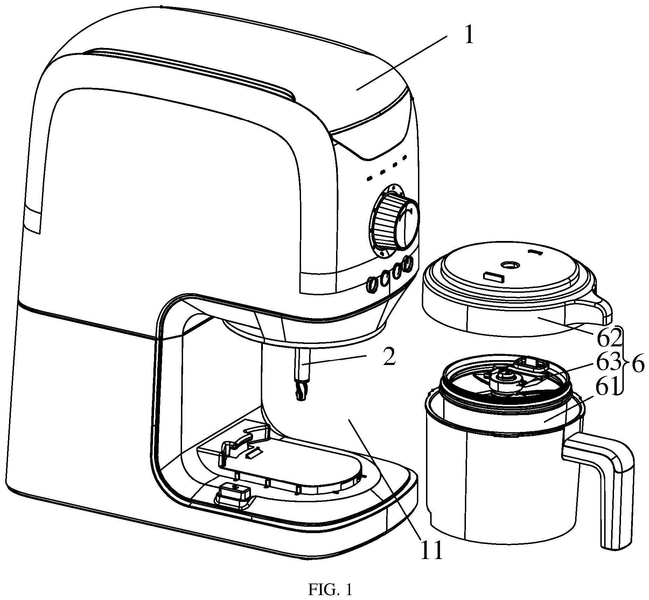

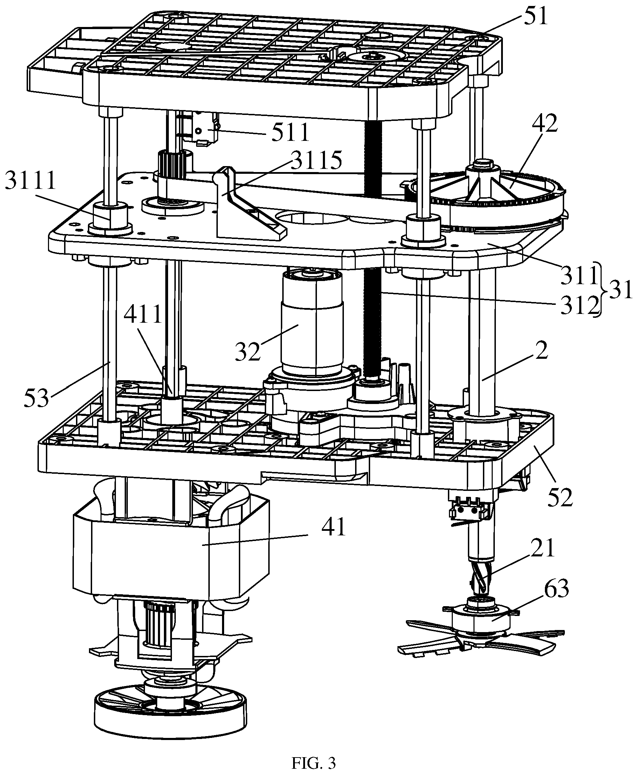

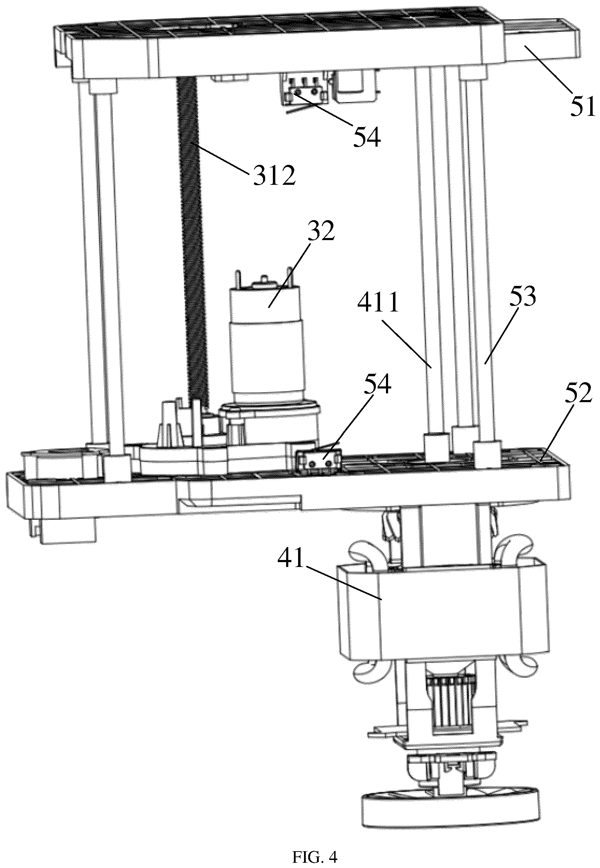

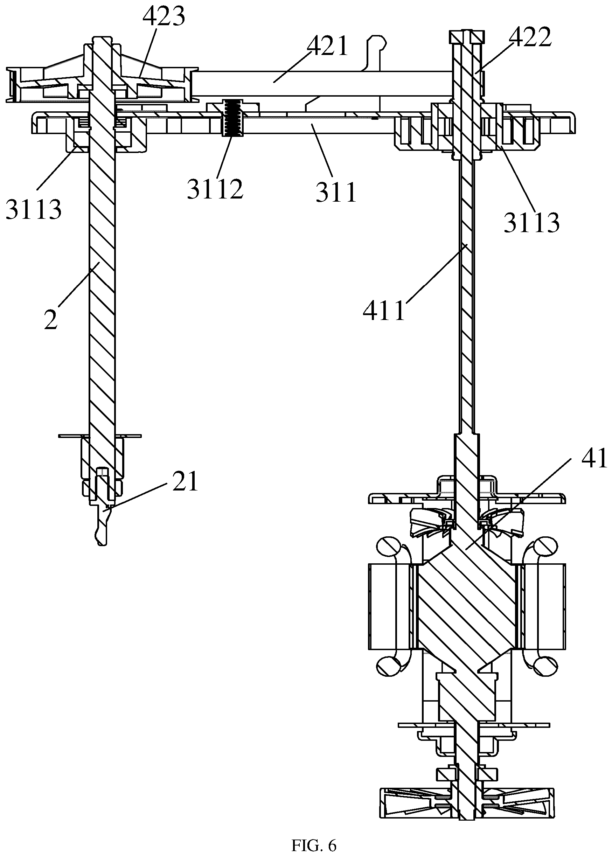

An embodiment of the present invention proposes an ice cream machine easy to drive, referring to FIG. 1 to FIG. 6, including:
a housing 1;
a stirring shaft 2, movably extending out of the housing 1;
a lifting assembly 3, including a lifting motor 32 and a lifting mechanism 31, the lifting motor 32 being fixedly arranged in the housing 1 and driving the lifting mechanism 31 to ascend and descend, and the stirring shaft 2 being connected to the lifting mechanism 31 and ascending and descending synchronously; and
a drive assembly 4, including a stirring motor 41 and a drive mechanism 42, the stirring motor 41 being fixedly arranged in the housing 1 and driving the drive mechanism 42 to rotate, the drive mechanism 42 being arranged on the lifting mechanism 31, and the drive mechanism 42 being connected to the stirring shaft 2 and used for driving the stirring shaft 2 to rotate.

This embodiment simplifies the drive structure of the ice cream machine, reduces the problem of noise the ice cream machine during use, and prolongs the service life of the motor; the stirring motor 41 and the lifting motor 32 are fixedly arranged in the housing 1, so that the motor does not make ascending and descending movement during working, thereby solving the problem of line disconnection or motor damage of the lifting motor 32 and the stirring motor 41, and ensuring the safety of use of the motor; the driving end of the stirring motor 41 is connected to the drive mechanism 42, and the drive mechanism 42 is connected to the stirring shaft 2, so that the stirring motor 41 drives the drive mechanism 42 to drive the stirring shaft 2 to rotate, thereby achieving stirring; the drive mechanism 42 is arranged on the lifting mechanism 31 and ascends and descends synchronously along with the lifting mechanism 31, and the lifting mechanism 31 is connected to the stirring shaft 2 to drive the stirring shaft 2 to ascend and descend, so that the stirring shaft 2 is inserted into the stirring cup. The lifting mechanism 31 is located inside the housing 1, the lifting motor 32 is used for driving the stirring shaft 2 and the lifting mechanism 31 to ascend and descend, the stirring motor 41 is used for driving the stirring shaft 2 to rotate circumferentially, the lifting mechanism 31 is connected to the driving end of the lifting motor 32, the drive mechanism 42 is connected to the driving end of the stirring motor 41, the stirring shaft 2 is connected to the drive mechanism 42, and the stirring shaft 2 and the drive mechanism 42 are both mounted on the lifting mechanism 31, so that when the lifting motor 32 is started, the lifting mechanism 31 is driven to ascend and descend to drive the stirring shaft 2 and the drive mechanism 42 to ascend and descend synchronously, and when the stirring motor 41 is started, the stirring motor 41 drives the drive mechanism 42 to start to drive the stirring shaft 2 to rotate circumferentially and stir.

In this embodiment, the ice cream machine easy to drive further includes a stirring cup assembly 6 mounted in the housing 1, the housing 1 is provided with a mounting space 11, the stirring cup assembly 6 can be mounted in the mounting space 11, and the stirring shaft 2 extends out of the housing 1 and enters the mounting space 11, thereby facilitating stirring of the stirring shaft 2. Specifically, the stirring cup assembly 6 includes a cup body 61 and a cup cover 62, ice cream stirring materials are placed in the cup body 61, the cup cover 62 covers an opening of the cup body 61, an upper part of the cup cover 62 is provided with an open hole for inserting of the stirring shaft 2, and under driving by the lifting assembly 3, and one end of the stirring shaft 2 extends out of the housing 1 and enters the interior of the cup body 61 through the open hole on the cup cover 62, to ascend and descend and stir in the cup body 61 in a reciprocating manner; the stirring cup assembly 6 further includes a stirring blade 63 located in the cup body 61, and the stirring blade 63 is used for being connected to the stirring shaft 2, so that the stirring shaft 2 drives the stirring blade 63 to rotate to stir and cut the stirring materials inside the cup body 61; the stirring blade 63 when not connected to the stirring shaft 2 is located on an inner side surface of the cup cover 62, and the stirring shaft 2 when entering the cup body 61 through the open hole of the cup cover 62 is synchronously in automatic snap-fit with the stirring blade 63, so that the stirring shaft 2 is quickly connected to the stirring blade 63 to drive the stirring blade 63 to descend; after the stirring is completed, when the stirring shaft 2 ascends to the position of the cup cover 62, the stirring shaft 2 is automatically disconnected from the stirring blade 63, the stirring blade 63 is in snap-fit with the inner side surface of the cup cover 62 again, and the stirring shaft 2 extends out of the cup body 61 through the open hole of the cup cover 62 and retracts to the housing 1. It can be understood that the stirring blade 63 may be positioned on the inner side surface of the cup cover 62 in a snap-fit manner or in a magnetic attraction manner, which is not limited herein.

Further, the drive mechanism 42 includes a synchronous belt 421, a first belt wheel 422, and a second belt wheel 423, the synchronous belt 421 is respectively connected to the first belt wheel 422 and the second belt wheel 423, the first belt wheel 422 is connected to a driving end of the stirring motor 41, and the second belt wheel 423 is connected to the stirring shaft 2. One end of the stirring shaft 2 is fixedly connected to the second belt wheel 423, and the other end of the stirring shaft 2 passes through the housing 1 and can extend out of the housing 1 or retract into the housing 1, so that the stirring shaft 2 is convenient to use and accommodate; the driving end of the stirring motor 41 is connected to the first belt wheel 422, the first belt wheel 422 and the second belt wheel 423 are in drive connection via the synchronous belt 421, when the first belt wheel 422 is driven by the stirring motor 41 to rotate, the first belt wheel 422 drives the synchronous belt 421 to move, and the synchronous belt 421 is driven to the second belt wheel 423 and drives the second belt wheel 423 to rotate, so that the stirring shaft 2 rotates; the drive of the synchronous belt 421 reduces the problem of noise of the ice cream machine during use, so that the drive structure of the ice cream machine is simpler and more convenient to assemble.

Further, a diameter of the first belt wheel 422 is less than that of the second belt wheel 423. In this embodiment, the diameter of the first belt wheel 422 is different from that of the second belt wheel 423, so that the linear speed of the synchronous belt 421 can be changed when the two belt wheels rotate; when the synchronous belt 421 is transmitted from the first belt wheel 422 to the second belt wheel 423, the linear speed of the synchronous belt 421 on the second belt wheel 423 will increase, so that the rotation speed of the second belt wheel 423 is increased, thereby increasing the rotation speed of the stirring shaft 2; moreover, the diameter of the first belt wheel 422 is less than that of the second belt wheel 423, so that the tension and running characteristics of the synchronous belt 421 can be changed to reduce noise and vibration in the drive assembly 4. It needs to be noted that the surfaces of the first belt wheel 422 and the second belt wheel 423 are both provided with a convex block and a groove structure, to increase the frictional force between the synchronous belt 421 and the first belt wheel 422 as well as the second belt wheel 423, thereby preventing the synchronous belt 421 from slipping and affecting use.

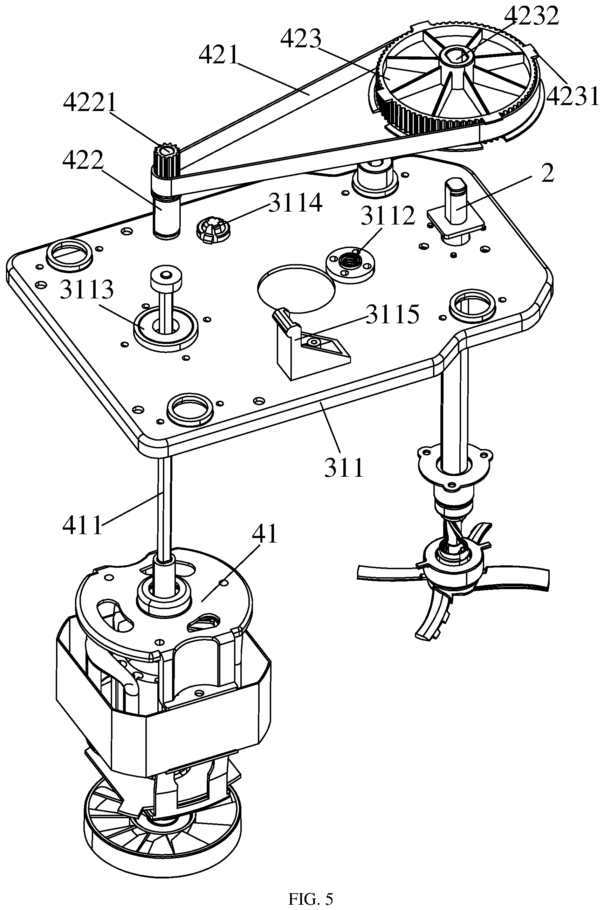

Further, specifically referring to FIG. 5, stop blocks 4231 are arranged at edges of an upper side and a lower side of the second belt wheel 422, and the synchronous belt 421 is located between intervals of the stop blocks 4231. The stop blocks 4231 are used for limiting the deviation of the synchronous belt 421, and the stop blocks 4231 are respectively located at the edges of two sides of the second belt wheel 423, an interval is formed between the stop blocks 4231 at two sides, and the synchronous belt 421 is located at the interval between the stop blocks 4231, so that the synchronous belt 421 when driving the second belt wheel 423 to rotate will not be disengaged from the second belt wheel 423 due to the slipping out of the side surface of the second belt wheel 423. It needs to be noted that a plurality of stop blocks 4231 are provided and arranged circumferentially along the edge of the second belt wheel 423. It can be understood that the stop blocks 4231 may also extend circumferentially along the edge of the second belt wheel 423 and are connected end to end, thereby limiting the deviation of the synchronous belt 421. In other embodiments, the stop blocks 4231 may also be arranged at the edge of the first belt wheel 422, thereby ensuring that the synchronous belt 421 will not be disengaged from the first belt wheel 422.

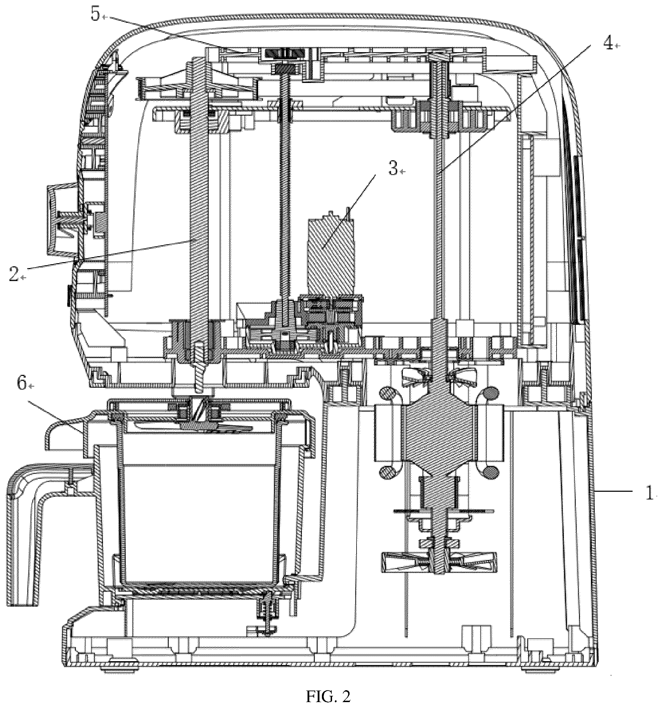

Further, referring to FIG. 2 to FIG. 3, a fixed support assembly 5 is arranged in the housing 1, the fixed support assembly 5 includes an upper support plate 51, a lower support plate 52, and a support shaft 53, the support shaft 53 is connected to the upper support plate 51 and the lower support plate 52, the stirring motor 41 is fixed to the lower support plate 52, and the lifting assembly 3 ascends and descends along the support shaft 53. The fixed support assembly 5 is fixed inside the housing 1, and the fixed support assembly 5 is used for improving the stability of the stirring shaft 2 during ascending and descending; the upper support plate 51 and the lower support plate 52 are fixedly arranged at intervals in the housing 1, the support shaft 53 is located between the upper support plate 51 and the lower support plate 52, and two ends of the support shaft 53 are fixedly connected to the upper support plate 51 and the lower support plate 52 respectively, in a thread fixing manner or in a snap fixing manner. In this embodiment, four support shafts 53 are provided, and the four support shafts 53 are located at four corners of the upper support plate 51 and the lower support plate 52 respectively, so that the upper support plate 51 and the lower support plate 52 are more stable; the stirring motor 41 is fixed to the lower support plate 52 by screws, and the lifting assembly 3 is located between the upper support plate 51 and the lower support plate 52 and the lifting assembly 3 moves in an ascending and descending manner along the extension direction of the support shaft 53, the stirring shaft 2 passes through the lower support plate 52 and extends out of the housing 1, a gasket is arranged at a position of the lower support plate 52 for the stirring shaft 2 to pass through, and the gasket surrounds the stirring shaft 2, so that a gap between the stirring shaft 2 and the lower support plate 52 is filled and the lower support plate 52 limits the stirring shaft 2 from swinging left and right during ascending and descending, thereby improving the stability of the stirring shaft 2.

Further, the driving end of the stirring motor 41 is provided with a drive rod 411, the first belt wheel 422 is provided with a first driving hole 4221 for the drive rod 411 to penetrate through, and the drive rod 411 drives the first belt wheel 422 to rotate circumferentially. Specifically, the stirring motor 41 is fixed on one side of the lower support plate 52 away from the upper support plate 51, to avoid affecting the lifting assembly 3; the driving end of the stirring motor 41 is provided with the drive rod 411, the drive rod 411 penetrates through the lower support plate 52 and extends to the upper support plate 51, an end portion of the drive rod 411 is inserted into the upper support plate 51 and can rotate relative to the upper support plate 51, and the upper support plate 51 and the lower support plate 52 limit the drive rod 411 from swinging left and right, thereby improving the stability of the drive rod 411. In this embodiment, the first belt wheel 422 sleeves the drive rod 411, and when the stirring motor 41 is started, the drive rod 411 rotates by itself, so that the first belt wheel 422 synchronously rotates circumferentially around the axis of the drive rod 411; the first belt wheel 422 drives the second belt wheel 423 to rotate via the synchronous belt 421, so that the second belt wheel 423 drives the stirring shaft 2 to rotate.

Further, the first driving hole 4221 and the drive rod 411 are both of a semicircular structure in cross section. A rod body of the drive rod 411 is of a semicylindrical structure. Specifically, one side of the drive rod 411 is provided with a limiting plane, so that the cross section of the drive rod 411 is of a semicircular structure; the cross section of the first driving hole 4221 is the same as that of the drive rod 411, after the drive rod 411 passes through the first driving hole 4221, under the blocking of the hole wall of the first driving hole 4221 and the limiting plane, the first belt wheel 422 cannot rotate relative to the drive rod 411, to prevent the drive rod 411 from idling in the first driving hole 4221; when the drive rod 411 rotates by itself, the limiting plane on the drive rod 411 abuts against the hole wall of the first driving hole 4221 and pushes the hole wall of the first driving hole 4221 to rotate, thereby driving the first belt wheel 422 to rotate. It can be understood that the cross sections of the rod body parts of the drive rod 411 are all the same, so that the first belt wheel 422 can ascend and descend and slide in a reciprocating manner in the axial direction of the drive rod 411. It needs to be noted that both the cross section of the drive rod 411 and the cross section of the first driving hole 4221 may also be non-circular structures such as an oval structure, a rectangular structure, or a triangle structure, so that the first belt wheel 422 not only can move in an ascending and descending manner along the drive rod 411, but also can be driven by the drive rod 411 to rotate circumferentially.

It can be understood that the second belt wheel 423 is fixedly connected to an end portion of the stirring shaft 2, so that the second belt wheel 423 when rotating can drive the stirring shaft 2 to rotate. Specifically, the second belt wheel 423 is provided with a second driving hole 4232 for inserting of the end portion of the stirring shaft 2, the cross section of the second driving hole 4232 is a non-circular structure, the cross section of the end of the stirring shaft 2 inserted into the second driving hole 4232 is the same as that of the second driving hole 4232, and the end portion of the stirring shaft 2 is also provided with a stop block 4231; when the end portion of the stirring shaft 2 is inserted into the second driving hole 4232, the stop block 4231 is located on an outer side of the second driving hole 4232 to block the second belt wheel 423 from moving up and down in an ascending and descending manner relative to the stirring shaft 2.

Further, the lifting mechanism 31 includes a lifting platform 311 and a screw rod 312, the lifting platform 311 is located between the upper support plate 51 and the lower support plate 52, the lifting motor 32 is connected to the screw rod 312 and drives the screw rod 312 to rotate, the lifting platform 311 is provided with a tooth sleeve 3112 for the screw rod 312 to penetrate through, and a thread fitting with the screw rod 312 is arranged on an inner wall of the tooth sleeve 3112. The lifting platform 311 is arranged between the upper support plate 51 and the lower support plate 52, the lifting motor 32 is fixed to the lower support plate 52 by screws to prevent the lifting motor 32 from swinging and causing line damage, the lifting motor 32 drives the lifting platform 311 to move in an ascending and descending manner along the support shaft 53, and the first belt wheel 422 and the second belt wheel 423 are mounted on the lifting platform 311 and move in an ascending and descending manner along with the lifting platform 311. In this embodiment, four support shafts 53 all penetrate through the lifting platform 311, so that the lifting platform 311 is more stable during ascending and descending; a shaft sleeve 3111 is fixedly arranged at a position of the lifting platform 311 where the support shaft 53 penetrates through, the shaft sleeve 3111 is provided with a shaft sleeve 3111 hole for the support shaft 53 to penetrate through, four shaft sleeves 3111 are provided, and the four shaft sleeves 3111 correspond to the four support shafts 53 respectively, so that the lifting platform 311 is in sliding fit with the support shafts 53, thereby ensuring the stability of ascending and descending movement of the lifting platform 311. It needs to be noted that the driving end of the lifting motor 32 drives the lifting platform 311 to ascend and descend, and the lifting motor 32 may also be replaced with other structures, for example, the lifting motor 32 is replaced with a pneumatic structure.

In this embodiment, the screw rod 312 is located between the upper support plate 51 and the lower support plate 52, and the screw rod 312 is rotatably connected to the upper support plate 51, so that the screw rod 312 can rotate by itself relative to the upper support plate 51; the lifting motor 32 is connected to one end of the screw rod 312 close to the lower support plate 52 and can drive the screw rod 312 to rotate axially. Specifically, the driving end of the lifting motor 32 is provided with a driving groove for inserted connection of the end portion of the screw rod 312, the driving groove is non-circular, and the screw rod 312 is inserted into the driving groove, so that the screw rod 312 is limited circumferentially relative to the driving groove; when the lifting motor 32 is started, the driving groove rotates circumferentially to drive the screw rod 312 to rotate by itself, the other end of the screw rod 312 passes through the lifting platform 311 and is connected to the upper support plate 51, the lifting platform 311 is provided with a tooth sleeve 3112 for the screw rod 312 to penetrate through, a thread is arranged on an outer side of the screw rod 312, and a thread fitting with the screw rod 312 is also arranged on the inner wall of the tooth sleeve 3112; when the lifting motor 32 drives the screw rod 312 to rotate in the forward or reverse direction, the thread on the screw rod and the thread on the tooth sleeve 3112 are engaged and move relative to each other, so that the tooth sleeve 3112 ascends and descends along the axis of the screw rod 312; the tooth sleeve 3112 is fixedly arranged on the lifting platform 311, so that the lifting platform 311 ascends and descends along the screw rod 312. It needs to be noted that the driving end of the lifting motor 32 is connected to the screw rod 312 to drive the screw rod 312 to rotate, and the screw rod 312 drives the lifting platform 311 to ascend and descend. In other embodiments, the lifting motor 32 can also be directly connected to the lifting platform 311, or the driving end of the lifting platform 311 drives the lifting platform 311 to move by a belt or gear.

Further, the stirring shaft 2 penetrates through the lifting platform 311, and the lifting platform 311 is provided with a bearing assembly 3113 surrounding the stirring shaft 2. In this embodiment, the first belt wheel 422, the synchronous belt 421 and the second belt wheel 423 are located on one side of the lifting platform 311 close to the upper support plate 51, the stirring shaft 2 is fixedly connected to the second belt wheel 423 and passes through the lifting platform 311 and the lower support plate 52 respectively, the stirring shaft 2 ascends and descends synchronously along with the lifting platform 311, the lifting platform 311 is provided with the bearing assembly 3113, the bearing assembly 3113 allows the stirring shaft 2 to penetrate through to surround the periphery of the stirring shaft 2, the bearing assembly 3113 includes a bearing seat and a bearing, the bearing seat is in a groove shape and is provided with a hole shaped structure at the bottom for the stirring shaft 2 to penetrate through, and the groove diameter of the bearing seat is greater than the diameter of the stirring shaft 2, so that the bearing can be accommodated in the groove of the bearing seat and surround the peripheral surface of the stirring shaft 2; the bearing seat and the bearing fit with the stirring shaft 2, so that the stability of the stirring shaft 2 is enhanced during ascending and descending and circumferential rotation. It can be understood that in this embodiment, the drive rod 411 penetrates through the lifting platform 311, the lifting platform 311 moves in an ascending and descending manner along the axis of the drive rod 411, a bearing assembly 3113 is also arranged at the position of the lifting platform 311 where the drive rod 411 penetrates through, and the bearing assembly 3113 surrounds the periphery of the drive rod 411, so that the stability between the lifting platform 311 during ascending and descending and the drive rod 411 is improved.

Further, the upper support plate 51 and the lower support plate 52 are each provided with a lifting detection switch 54, the lifting detection switch 54 is used for controlling turning-off of the lifting motor 32, and the lifting platform 311 is provided with a trigger member 3114 for triggering the lifting detection switch 54; the lifting detection switch 54 is used for controlling the stop of the lifting motor 32. In this embodiment, the trigger member 3114 is of a convex block structure, the trigger member 3114 is fixed to the lifting platform 311, and the position of the trigger member 3114 is opposite to the position of the lifting detection switch 54; when the user needs to make the stirring shaft 2 descend, the user controls the start of the lifting motor 32, so that the lifting platform 311 drives the stirring shaft 2 to extend out of the housing 1; when the lifting platform 311 descends close to the lower support plate 52, the trigger member 3114 located on the lifting platform 311 abuts against the lifting detection switch 54 on the lower support plate 52, so that the lifting detection switch 54 starts and sends a signal to the lifting motor 32 to control the lifting motor 32 to stop; when the user needs to control the stirring shaft 2 to ascend, the lifting motor 32 is restarted to drive in reverse the lifting platform 311 to move, and when the lifting platform 311 ascends to the position of the upper support plate 51, the trigger member 3114 located on the lifting platform 311 abuts against the lifting detection switch 54 on the upper support plate 51, so that the lifting detection switch 54 starts and sends a signal to the lifting motor 32 to control the lifting motor 32 to stop. It needs to be noted that in this embodiment, trigger members 3114 are located on the two sides of the lifting platform 311, respectively. In other embodiments, the lifting detection switch 54 can also be a Hall switch and the trigger member 3114 is a magnetic member, or the lifting detection switch 54 is a laser emitting member and the trigger member 3114 is an insert sheet that blocks a laser, etc.

Further, the upper support plate 51 is further provided with an engaging and retracting detection switch 511 for controlling engaging and retracting of the stirring shaft 2, the engaging and retracting detection switch 511 is used for controlling the stirring shaft 2 to engage and retract, and the lifting platform 311 is correspondingly provided with an engaging and retracting switch lever 3115 for triggering the engaging and retracting detection switch 511. The engaging and retracting detection switch 511 is arranged on the upper support plate 51 to send engaging and retracting signals to the stirring shaft 2, the engaging and retracting switch lever 3115 is arranged on the lifting platform 311, and the lower end of the stirring shaft 2 is provided with a connector 21 detachably connected to the stirring blade 63. In this embodiment, a toggle block for triggering the engaging and retracting detection switch 511 is arranged on a side surface of the engaging and retracting switch lever 3115, the engaging and retracting detection switch 511 is provided with a toggle head, the toggle head is located on a movement path of the toggle block and allows the toggle block to toggle; when the lifting platform 311 drives the stirring shaft 2 to descend, the toggle block synchronously descends and toggles the toggle head, and the engaging and retracting detection switch 511 is triggered to control the connector 21 on the stirring shaft 2 to start; when the connector 21 of the stirring shaft 2 abuts against the stirring blade 63, the connector 21 automatically rotationally fixed to the stirring blade 63 in a snap-fit manner to achieve quick connection between the stirring shaft 2 and the stirring blade 63; when the lifting platform 311 drives the stirring shaft 2 to ascend, the connector 21 drives the stirring blade 63 to ascend to the inner side surface of the cup cover 62, at this time, the toggle block also ascends synchronously and toggles the toggle head again, the engaging and retracting detection switch 511 is triggered again to control the connector 21 to rotate in reverse, so that the connector 21 is separated from the stirring blade 63, and the stirring shaft 2 retracts into the housing 1. It needs to be noted that the engaging and retracting detection switch 511 and the engaging and retracting switch lever 3115 can also be replaced with other control structures, e.g., a Hall switch structure, etc.

The foregoing descriptions are merely optional embodiments of the present invention, but are not intended to limit the patent scope of the present invention, any equivalent structural transformation made using the contents of the specification and drawings of the present invention, or directly/indirectly applied in other related technical fields, under the invention concept of the present invention, is included in the scope of patent protection of the present invention.

## Claims

1. An ice cream machine easy to drive, **characterized by** comprising:
a housing;
a stirring shaft, movably extending out of the housing;
a lifting assembly, comprising a lifting motor and a lifting mechanism, the lifting motor being fixedly arranged in the housing and driving the lifting mechanism to ascend and descend, and the stirring shaft being connected to the lifting mechanism and ascending and descending synchronously; and
a drive assembly, comprising a stirring motor and a drive mechanism, the stirring motor being fixedly arranged in the housing and driving the drive mechanism to rotate, the drive mechanism being arranged on the lifting mechanism, and the drive mechanism being connected to the stirring shaft and used for driving the stirring shaft to rotate.

2. The ice cream machine easy to drive according to claim 1, **characterized in that** the drive mechanism comprises a synchronous belt, a first belt wheel, and a second belt wheel, the synchronous belt is respectively connected to the first belt wheel and the second belt wheel, the first belt wheel is connected to a driving end of the stirring motor, and the second belt wheel is connected to the stirring shaft.

3. The ice cream machine easy to drive according to claim 2, **characterized in that** the driving end of the stirring motor is provided with a drive rod, the first belt wheel is provided with a first driving hole for the drive rod to penetrate through, and the drive rod drives the first belt wheel to rotate circumferentially.

4. The ice cream machine easy to drive according to claim 3, **characterized in that** the first driving hole and the drive rod are both of a semicircular structure in cross section.

5. The ice cream machine easy to drive according to claim 2, **characterized in that** a diameter of the first belt wheel is less than that of the second belt wheel.

6. The ice cream machine easy to drive according to claim 2, **characterized in that** stop blocks are arranged at edges of an upper side and a lower side of the second belt wheel, and the synchronous belt is located between intervals of the stop blocks.

7. The ice cream machine easy to drive according to claim 2, **characterized in that** a fixed support assembly is arranged in the housing, the fixed support assembly comprises an upper support plate, a lower support plate, and a support shaft, the support shaft is connected to the upper support plate and the lower support plate, the stirring motor and the lifting motor are both fixed to the lower support plate, and the lifting mechanism moves between the upper support plate and the lower support plate.

8. The ice cream machine easy to drive according to claim 7, **characterized in that** the lifting mechanism comprises a lifting platform and a screw rod, the lifting platform is located between the upper support plate and the lower support plate, the lifting motor is connected to the screw rod and drives the screw rod to rotate, the lifting platform is provided with a tooth sleeve for the screw rod to penetrate through, and a thread fitting with the screw rod is arranged on an inner wall of the tooth sleeve.

9. The ice cream machine easy to drive according to claim 8, **characterized in that** the stirring shaft penetrates through the lifting platform, and the lifting platform is provided with a bearing assembly surrounding the stirring shaft.

10. The ice cream machine easy to drive according to claim 8, **characterized in that** the upper support plate and the lower support plate are each provided with a lifting detection switch, the lifting detection switch is used for controlling turning-off of the lifting motor, and the lifting platform is provided with a trigger member for triggering the lifting detection switch; and/or
the upper support plate is further provided with an engaging and retracting detection switch for controlling engaging and retracting of the stirring shaft, the engaging and retracting detection switch is used for controlling the stirring shaft to engage and retract, and the lifting platform is correspondingly provided with an engaging and retracting switch lever for triggering the engaging and retracting detection switch.
